# EUROPEAN PATENT SPECIFICATION

(11) **EP 1 403 127 B1**
(45) Date of publication and mention of the grant of the patent: **31.01.2007**
(21) Application number: 03020275.8
(22) Date of filing: 08.09.2003
(51) Int. Cl.: B60K 37/02, G01K 1/14

(54) **Motorcycle information display comprising an air temperature sensor**
Informationsanzeige für ein Motorrad mit einem Lufttemperatursensor
Dispositif d'affichage d'information pour motocyclette comprenant un capteur de température de l'air

(30) Priority: 30.09.2002 JP 2002288024
(43) Date of publication of application: 31.03.2004
(73) Proprietor: HONDA GIKEN KOGYO KABUSHIKI KAISHA, Minato-ku, Tokyo (JP)
(72) Inventor: Murakami, Kazuhiro, Wako-shi, Saitama (JP)
(74) Representative: Liska, Horst

(56) References cited:
- DE-A- 10 013 930
- DE-A- 10 113 222
- DE-A- 19 853 462
- JP-A- 11 115 856
- US-A- 4 891 252

## Description

The present invention relates to a display apparatus for a vehicle for displaying information mainly to a vehicle operator.

JP 11-115856 A discloses an information display apparatus for a motorcycle.

DE 19853462 A discloses a motorcycle with an external air temperature sensor.

In an information display apparatus for vehicle use for displaying vehicle information and the like mainly to a vehicle operator, technology exists which detects and displays the temperature of the external air in the surroundings of a vehicle (for example, refer to Patent Document 1).

### Patent Document 1:

Japanese published unexamined application Hei. 5-187924.

In the technology described in the above-mentioned Patent Document 1, since an external air temperature sensor is mounted inside the case of a rearview mirror, the distance from the external air temperature sensor to the display section is long. As a result, there was the problem that handling of the harness that links the external air temperature sensor and the display section was tedious and the assembly cost increased.

Therefore, the object of the present invention is to provide an information display apparatus for vehicle, in which handling of the harness that links the external air temperature sensor and the display section is easy and whose assembly cost can be lowered.

In order to achieve the above-mentioned objective, the invention related to Claim 1 is characterized in that, in an information display apparatus for vehicle having a display section (for example, display section 11 in the embodiment) that receives a detection signal from a plurality of detection means, which detect vehicle-related information, and displays vehicle-related information, and a case that supports the display section (for example, case 84 in the embodiment), an external air temperature sensor (for example, external air temperature sensor 70 in the embodiment) , among the previously-mentioned plurality of detection means, that detects the external air temperature is mounted on the previously-mentioned case.

In this way, since the external air temperature sensor is fixed to the case that supports the display section, handling of the harness that links the external air temperature sensor to the display section becomes easy.

An embodiment of the information display apparatus for vehicle of the present invention will be explained in the following with reference to the drawings, in which:
Fig. 1 is a front view showing the information display apparatus for a vehicle of one embodiment of the present invention.
Fig. 2 is a block diagram showing the information display apparatus for a vehicle of one embodiment of the present invention and such.
Fig. 3 is a front view showing the display switch portion main body of the information display apparatus for vehicle of one embodiment of the present invention.
Fig. 4 is a front view showing the display switch portion main body of the information display apparatus for a vehicle of one embodiment of the present invention.
Fig. 5 is a sectional side view the information display apparatus for a vehicle of one embodiment of the present invention.
Fig. 6 is a side view of the information display apparatus for a vehicle of one embodiment of the present invention.
Fig. 7 is a view where the case main body portion of the information display apparatus for vehicle of one embodiment of the present invention as seen from the rear side.
Fig. 8 is a sectional view that follows the X-X line in Fig. 7 of the information display apparatus for a vehicle of one embodiment of the present invention.
Fig. 9 is a sectional view that follows the Y-Y line in Fig. 7 of the information display apparatus for a vehicle of one embodiment of the present invention.

In addition, front, back, left and right in the explanation below are back, left and right taking the forward direction as reference.

An information display apparatus for vehicle 10 of the present embodiment is mounted on a vehicle. Specifically, it is a so-called combination meter that is installed on a two-wheeled motor vehicle, and shown simplified in the figure, and is mounted on the top bridge in a state where it is placed on the front side of the handle, at the top of the head light.

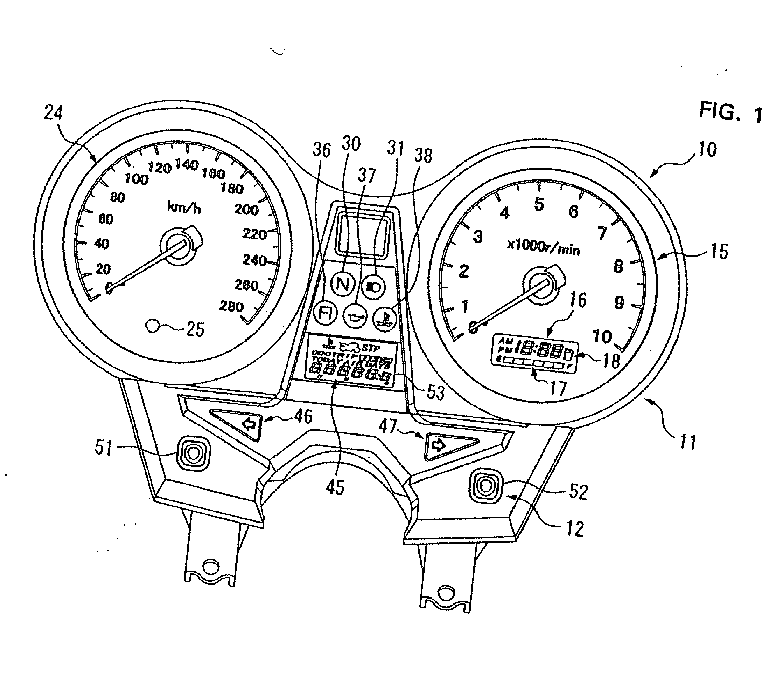

The information display apparatus for vehicle 10 of the present embodiment, as shown in Fig. 1, has a display section 11 installed on the front side, which performs display of vehicle-related information mainly to the vehicle operator, and an operation input portion 12 is mounted on the rear side, where operation input is performed mainly by the vehicle operator.

The display section 11 is connected to a plurality of detection means that detect information related to the vehicle, receives a detection signal from these detection means and displays information related to the vehicle.

Specifically, the display section 11 has an analog type tachometer 15, which is installed on the right side of the front portion, a digital type time displaying section 16, which is installed on the rear side of this tachometer 15, a fuel indicator 17, which is installed on the rear side of this time displaying section 16 and a fuel warning display section 18, which is installed on the right side of the time displaying section 16.

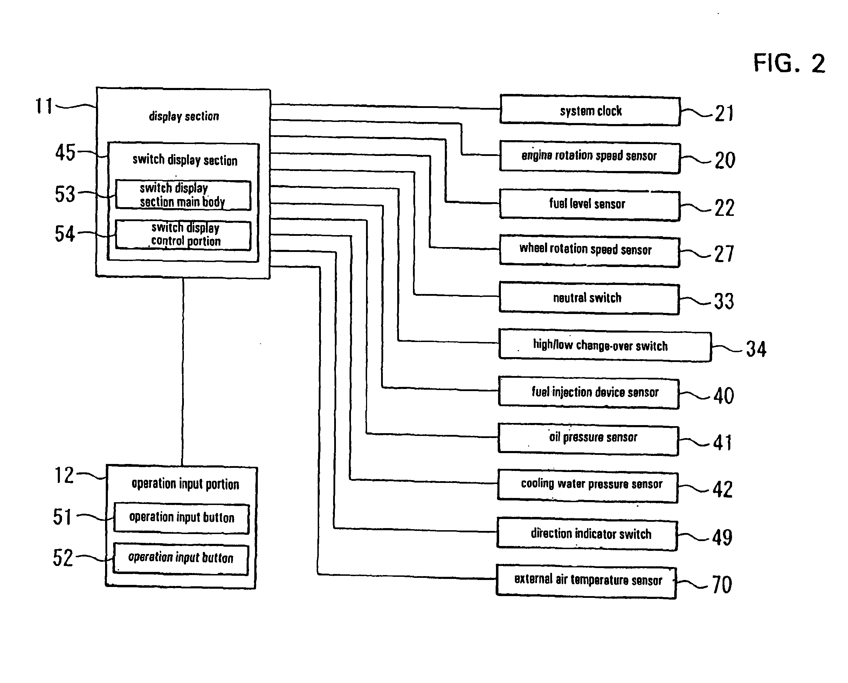

The tachometer 15 displays the engine rotation speed based on the detection signal from an engine rotation speed sensor (detection means) 20 shown in Fig. 2, which detects the engine rotation speed.

The time displaying section 16 displays the time based on the output signal from a system clock (clock means) 21 shown in Fig. 2. The fuel indicator 17 displays the amount of fuel remaining in a fuel tank, not shown in the figure, via lighting numbers according to the remaining amount, based on the detection signal from a fuel level sensor (detection means) 22 shown in Fig. 2.

When the amount of fuel remaining in the fuel tank, not shown in the figure, reaches a prescribed value or less based on the detection signal of the fuel level sensor 22, the fuel warning display section 18 displays this by lighting up, and it is turned off for other states.

In addition, the display section 11 has an analog type speed meter 24, which is installed on the left side of the front portion, and a theft prevention device indicator lamp 25, which is installed on the rear side of this speed meter 24.

The speed meter 24 displays the speed of the vehicle body based on the detection signal from a wheel rotation speed sensor (detection means, driving distance detection means) 27, shown in Fig. 2, which detects the rotation speed of wheels.

If, for example, the key is pulled out from the ignition switch, not shown in the figure, for a duration of a prescribed time, the theft prevention device indicator lamp 25 indicates by blinking that the theft prevention device, not shown in the figure, is in operation.

In addition, the display section 11 has a neutral lamp 30 and a high beam lamp 31, in the front row at the center of the front portion.

Based on the detection signal from a neutral switch (detection means) 33, shown in Fig. 2, which detects the fact that the transmission, not shown in the figure, is in the neutral position, the neutral lamp 30 indicates this by lighting up if neutral, and it is turned off if not. In addition, the letter "N", the first letter of neutral, is written on the neutral lamp 30.

Based on the signal from a high/low switch (detection means) 34, shown in Fig. 2, which switches a head light, not shown in the figure, to light up in the upper direction, if the status is illumination in the upper direction, the high beam lamp 31 displays this by lighting up, and it is turned off if not. In addition, a symbol that shows the fact that the status is high beam is written on the high beam lamp 31.

In addition, the display section 11 has a fuel injection device warning lamp 36, oil pressure warning lamp 37 and a cooling water temperature warning lamp 38, in the middle row at the center of the front portion.

Based on the detection signal from a fuel injection device sensor (detection means) 40, shown in Fig. 2, which detects anomalies in the electronically controlled fuel injection device, not shown in the figure, if there is an anomaly in the electronically controlled fuel injection device, the fuel injection device warning lamp 36 displays this by lighting up, and it is turned off if not. In addition, the letters "FI", which indicate the fuel injection device, are written on the fuel injection device warning lamp 36.

Based on the detection signal from an oil pressure sensor (detection means) 41, shown in Fig. 2, which detects that the amount of engine oil in the has reached a prescribed value or lower, if the amount of engine oil reaches a prescribed value or less, the oil pressure warning lamp 37 indicates this by lighting up, and it is turned off if not. In addition, a symbol that indicates the amount of oil is written on the oil pressure warning lamp 37.

Based on the detection signal from a cooling water pressure sensor (detection means) 42, shown in Fig. 2, which detects the temperature of the cooling water of the radiator, not shown in the figure, if the cooling water temperature reaches a prescribed value or above, the cooling water temperature warning lamp 38 displays this by lighting up, and it is turned off if not. In addition, a symbol that indicates the cooling water temperature is written on the cooling water temperature warning lamp 38.

In addition, the display section 11 has a switch-display section 45 in the rear row at the center of the front portion, and a left side turning indicator lamp 46 and a right side turning indicator lamp 47 on the rear side.

Based on the signal from a turning indicator switch (detection means) 49, shown in Fig. 2, which switches the blinking of a turning indicator lamp, not shown in the figure, to the left or to the right, if the turning indicator lamp on the left side is in the blinking state, the left side turning indicator lamp 46, displays this by blinking, and it is turned off if not. In addition, the symbol "←" is written on the left side turning indicator lamp 46.

Based on the signal from the turning indicator switch 49, if the right side turning indicator lamp is in the blinking state, the right side turning indicator lamp 47 displays this by blinking, and it is turned off if not. In addition, the symbol "→" is written on the left side turning indicator lamp 47.

Then, in the vicinity of each of these left side turning indicator lamp 46 and right side turning indicator lamp 47, on their rear side, operation input buttons 51 and 52 are installed at two locations, which constitute the operation input section 12.

The switch display-section 45 mentioned above has a switch display section main body 53, which performs display, and a switch display control portion 54, shown in Fig. 2, which controls display of the switch display section main body 53 whose display mode is switched through the appropriate operation of the operation input buttons 51 and 52 at two locations, which constitute the operation input section 12, which are connected to the switch display control portion 54.

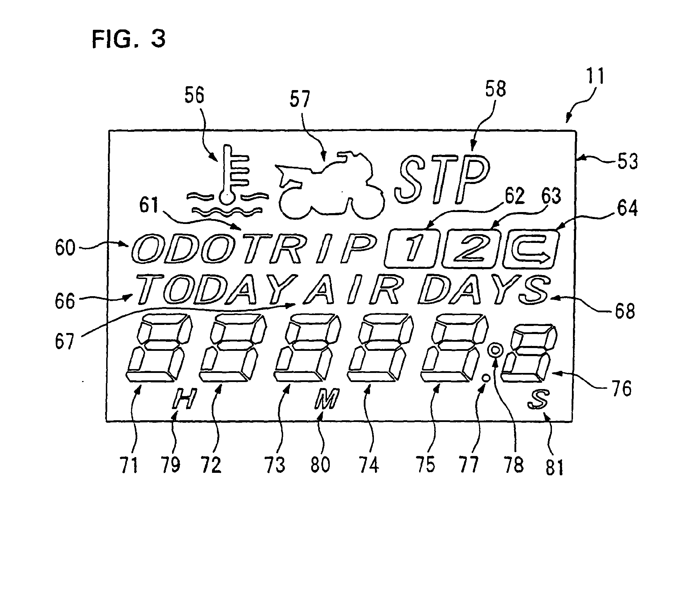

As shown in Fig. 3, the switch display section main body 53 has a cooling water temperature display mode-display section 56 and a maintenance indicator 57 and a stopwatch mode-display section 58 in its front row.

Based on the detection signal from the cooling water pressure sensor 42, shown in Fig. 2, if the cooling water temperature display mode, which displays the cooling water temperature is entered by selection, the cooling water temperature display mode display section 56 shows a symbol that indicates the cooling water temperature by lighting it up, and it is turned off if not.

Based on the output signal from the system clock 21 and the like, shown in Fig. 2, if the time measured from the time point when a previous maintenance was performed and a reset operation was executed exceeds a prescribed length of time, the maintenance indicator 57 displays the image of a motorcycle by lighting it up, and it is turned off if not. In addition, the rider can also set the date and time of safety inspections or checkups at will, and light up the maintenance indicator 57 at the set date and time.

When the stop watch mode is entered by selection, which executes stop watch measurements based on the output signal of the system clock 21, the stop watch mode display section 58 displays the letters "STP" by lighting them up, and they are turned off if not.

In addition, the switch display section main body 53 has an odometer mode-display section 60, a trip meter mode-display section 61, a first trip meter mode-display section 62, a second trip meter mode-display section 63 and a subtractive trip meter mode-display section 64, at its middle front row.

When the odometer mode, which displays the total driving distance based on the detection signal from the wheel rotation speed sensor 27, shown in Fig. 2, which detects the rotation speed of a wheel, is entered by selection, the odometer mode display section 60 displays the letters "ODO" by lighting them up, and they are turned off if not.

Based on the detection signal from the wheel rotation speed sensor 27, if either one of the two types of first trip meter mode and second trip meter mode, which display the driving distance from the point of time when the previous reset operation was executed, is entered by selection, and further if the mode for additive display is entered by selection, the trip meter mode display section 61 displays the letters "TRIP" by lighting them up, and they are turned off if not.

When the first trip meter mode, which displays the driving distance from the point of time when the previous reset operation was executed, is entered by selection, the first trip meter mode display section 62 displays the letter "1" by lighting it up, and it is turned off if not.

When the second trip meter mode, which displays the driving distance from the point of time when the previous reset operation was executed, is entered by selection, the second trip meter mode display section 63 displays the letter "2" by lighting it up, and it is turned off if not.

If either one of the two types of first trip meter mode and second trip meter mode is entered by selection, and further if the mode for subtractive display is entered by selection, the subtractive trip meter mode display section 64 displays a symbol that displays that it is in subtractive display mode by lighting it up, and it is turned off if not.

In addition, the switch display section main body 53 has a current day driving distance mode display section 66, an external air temperature display mode display section 67 and a date input mode display section 68, in its center rear row.

Based on the output signal from the system clock 21 and the detection signal from the wheel rotation speed sensor 27, shown in Fig. 2, when the current day driving distance mode, which calculates and displays the driving distance of the vehicle of the current day (from 0:00 midnight to 0:00 midnight the next day) that is per day, is entered by selection, the current day driving distance mode display section 66 displays the letters "TODAY" by lighting them up, and they are turned off if not.

When the external air temperature display mode, which displays the external air temperature based on the detection signal from the external air temperature sensor (detection means) 70, described below, is entered by selection, the external air temperature display mode display section 67 displays the letters "AIR" by lighting them up, and they are turned off if not.

If the date input mode is entered by selection, in which, for example, the date of the system clock is entered or the date when the maintenance indicator is to be displayed is entered, the date input mode display section 68 displays the letters "DAYS" by lighting them up, and they are turned off if not.

In addition, the switch display section main body 53 has, in the rear row, sequentially from the left side, a first display section 71, a second display section 72, a third display section 73, a fourth display section 74, a fifth display section 75 and a sixth display section 76, in addition, it has a decimal point display section 77 at the rear side position between the fifth display section 75 and the sixth display section 76, and a degree display section 78 at the middle position in the front-rear direction between the fifth display section 75 and the sixth display section 76, respectively.

In addition, the switch display section main body 53 has an hours display section 79 on the rear side of a position between the first display section 71 and the second display section, a minutes display section 80 on the rear side of a position between the third display section 73 and the fourth display section 74, and a seconds display section 81 on the rear side of a position of the sixth display section 76 opposite to the fifth display section 75, respectively.

The first display section 71, the second display section 72, the third display section 73, the fourth display section 74, the fifth display section 75 and the sixth display section 76 each have 7-segment light emitting elements and display the numbers "0" through "9" by lighting them up as necessary. In addition, only the sixth display section 76 can further display the letter "C" with 3 segments below the center by lighting them up as necessary.

The decimal point display section 77 displays ".", which indicates the decimal point, between the fifth display section 75 and the sixth display section 76 by lighting it up as necessary.

The degree display section 78 displays "°" between the fifth display section 75 and the sixth display section 76 by lighting it up as necessary to displays display "°C", which indicates the temperature, in combination with the "C" that has been displayed by lighting it up at the sixth display section 76.

The hours display section 79 displays "H", which indicates the hours, by lighting it up as necessary at a position between the first display section 71 and the second display section 72, the minutes display section 80 displays "M", which indicates the minutes, by lighting it up as necessary at a position between the third display section 73 and fourth display section 74, and the seconds display section 81 displays "S", which indicates the seconds, by lighting it up as necessary on the outer side of the sixth display section 76.

Then, for example, if the cooling water temperature display mode is entered by selection via an appropriate operation of the operation input buttons 51 and 52 at two locations, which constitute the operation input portion 12, the switch display control portion 54, based on the detection signal from the cooling water pressure sensor 42, displays the numbers of the cooling water temperature in the fourth display section 74 and the fifth display section 75 by lighting them up while displaying the symbol that indicates the cooling water temperature in the cooling water temperature display mode display section 56, in addition, it displays "C" in the sixth display section 76 by lighting it up while it displays "°" in the degree display section 78 by lighting it up, to display "°C".

In addition, for example, if the stop watch mode is entered by selection via an appropriate operation of the operation input buttons 51 and 52, the switch display control portion 54 displays the letters "STP" by lighting them up in the stop watch mode display section 58.

In this state, if a stop watch measurement based on the output signal from the system clock 21 is performed via an appropriate operation of the operation input buttons 51 and 52, the switch display control portion 54 displays ".", which indicates the decimal point, by lighting it up in the decimal point display section 77,displays "H", which indicates the hours, by lighting it up in the hours display section 79, displays "M", which indicates the minutes, by lighting it up in the minutes display section 80, and displays "S", which indicates the seconds, by lighting it up in the display section 81, while displaying the numbers of this measurement value by lighting them up in the first display section 71, the second display section 72, the third display section 73, the fourth display section 74, the fifth display section 75 and the sixth display section 76.

In doing so, the switch display control portion 54 displays a number that is an integer for hour units in the first display section 71, a two-digit number that is an integer for minute units in the second display section 72 and the third display section 73, a two-digit number that is an integer for second units in the fourth display section 74 and the fifth display section 75, and a number that is smaller than a second unit in the sixth display section 76, by lighting them up, respectively.

In addition, for example, if the odometer mode is entered by selection via an appropriate operation ofthe operation input buttons 51 and 52, the switch display control portion 54 displays "ODO", which indicates the displaying of the total driving distance, by lighting it up in odometer mode display section 60. In addition, the switch display control portion 54 displays the total driving distance that it has been adding and memorizing based on the detection signal from the wheel rotation speed sensor 27 among the first display section 71, by lighting up the necessary elements among the second display section 72, the third display section 73, the fourth display section 74, the fifth display section 75 and the sixth display section 76, and displays ".", which indicates the decimal point by lighting it up in the decimal point display section 77.

In doing so, the switch display control portion 54 displays a five-digit number that is an integer for Km units by lighting it up in the first display section 71, the second display section 72, the third display section 73, the fourth display section 74 and the fifth display section 75, and a number that is a 100 m unit in the sixth display section 76, respectively.

In addition, for example, if the first trip meter mode is entered by selection via an appropriate operation of the operation input buttons 51 and 52, the switch display control portion 54 displays the letter "1" by lighting it up in the first trip meter mode display section 62 while displaying the letters "TRIP" by lighting it up in the trip meter mode display section 61. In addition, the switch display control portion 54 displays ".", which indicates the decimal point by lighting it in the decimal point display section 77, while displaying the driving distance that it has been adding and memorizing based on the detection signal from the wheel rotation speed sensor 27 since the latest reset time of the first trip meter mode by lighting up the necessary elements among the first display section 71, the second display section 72, the third display section 73, the fourth display section 74, the fifth display section 75 and the sixth display section 76. In addition, displaying of the distance is the same as in the odometer mode mentioned above.

In addition, for example, the second trip meter mode is entered by selection via an appropriate operation of the operation input buttons 51 and 52 at two locations, the switch display control portion 54 displays the letter "2" by lighting it up in the second trip meter mode display section 63 while displaying the letters "TRIP" by lighting it up in the trip meter mode display section 61. In addition, the switch display control portion 54 displays ".", which indicates the decimal point by lighting it in the decimal point display section 77, while displaying the driving distance that it has been adding and memorizing based on the detection signal from the wheel rotation speed sensor 27 since the latest reset time of the second trip meter mode by lighting up the necessary elements among the first display section 71, the second display section 72, the third display section 73, the fourth display section 74, the fifth display section 75 and the sixth display section 76. In this case also, displaying of the distance is the same as in the odometer mode mentioned above.

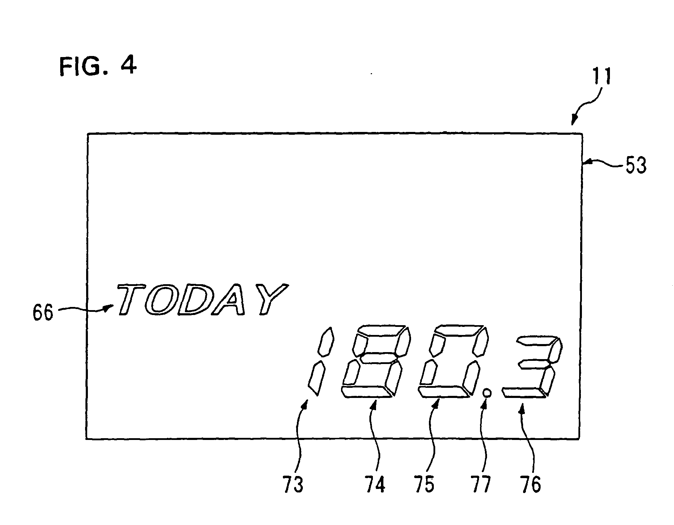

Then, in the present embodiment, if the current day driving distance mode is entered by selection via an appropriate operation of the operation input buttons 51 and 52,the switch display control portion 54 displays the letters "TODAY" by lighting them up in the current day driving distance mode display section 66. In addition, the switch display control portion 54, based on the output signal from the system clock 21 and the detection signal from the wheel rotation speed sensor 27, displays ".", which indicates the decimal point by lighting it in the decimal point display section 77, while displaying the current day driving distance that it has been adding and memorizing since the reset time at 0:00 midnight immediately before, by lighting up the necessary elements among the first display section 71, the second display section 72, the third display section 73, the fourth display section 74, the fifth display section 75 and the sixth display section 76. In this case also, displaying of the distance is the same as in the odometer mode mentioned above. For example, if the current day driving distance was 180.3Km, as shown in Fig. 4, while displaying the letters "TODAY" in the current day driving distance mode display section 66, it displays "1" in the third display section 73, "8" in the fourth display section 74, "0" in the fifth display section 75, "." in the decimal point display section 77 and "3" in the sixth display section 76.

In addition, the driving distance displayed in this current day driving distance mode is calculated based on the detection signal from the wheel rotation speed sensor 27. The accumulation is started at the time point 0:00 midnight immediately before, and is automatically reset to zero at 0:00 midnight the next day. In other words, the display section 11 calculates and displays the driving distance per day of the vehicle.

In addition, in the present embodiment, if the external air temperature display mode is entered by selection via an appropriate operation of the operation input buttons 51 and 52, the switch display control portion 54 displays the two-digit number of the external air temperature by lighting it up in the fourth display section 74 and fifth display section 75 based on the detection signal from the external air temperature sensor 70, while displaying the letters "AIR" by lighting them up in the external air temperature display mode display section 67, in addition, it displays "C" in the sixth display section 76, while displaying "°" by lighting it up in the degree display section 78 to display "°C".

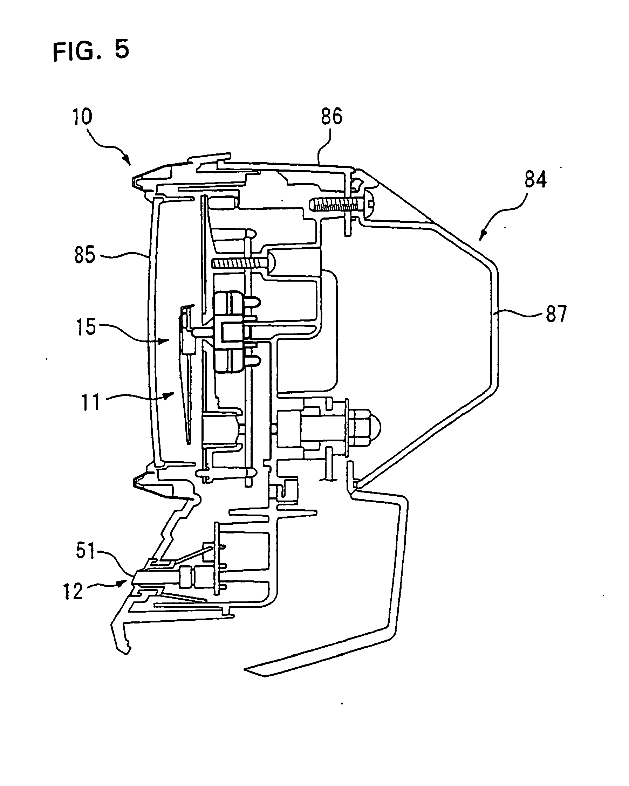

Then, as shown in Fig. 5, the information display apparatus for vehicle 10 of the present embodiment is constituted by the display section 11 and the operation input portion 12 described above and a case 84, which protects them while supporting them.

The case 84 has a front cover portion 85, which covers the front side of the display section 11, a case main body portion 86 that covers the side portion and the rear portion of the display section 11 while supporting it and a rear cover portion 87 that covers the rear opening of the case main body portion 86, and it is provided with the operation input buttons 51 and 52 of the operation input portion 12 on the front cover portion 85.

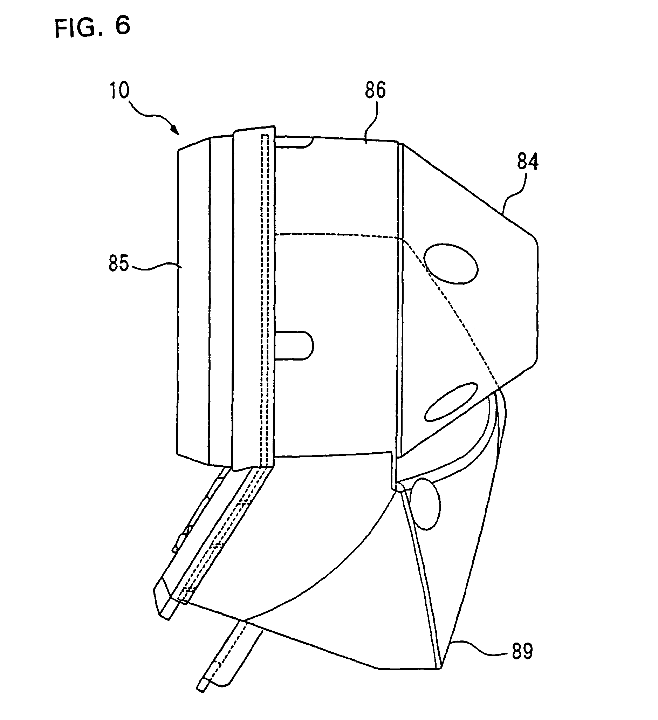

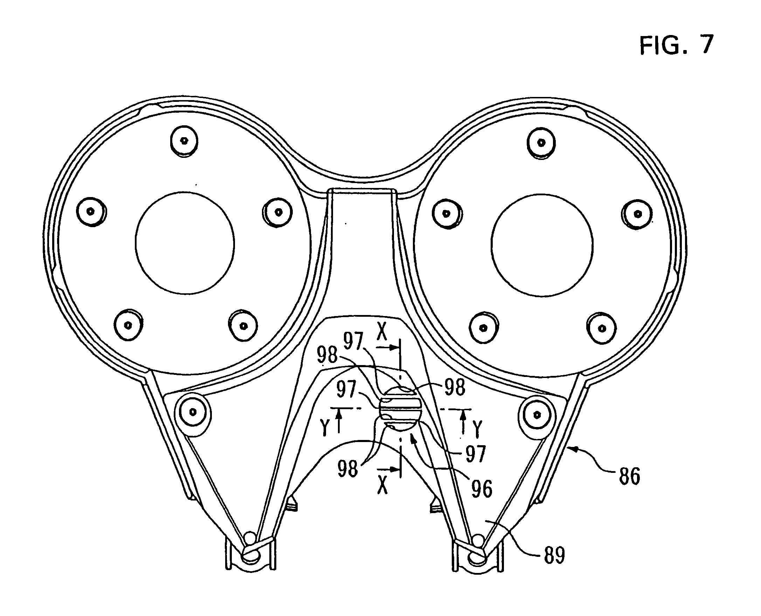

As shown in Fig. 6 and Fig. 7, the case main body portion 86 has a stretched out portion 89 that forms an elongated shape protruding in the rear direction while avoiding interference with a head light, not shown in the figure, and enlargement of the internal space is achieved by means of this stretched out portion 89. Thus, a large number of electrical parts can be placed inside the case 84.

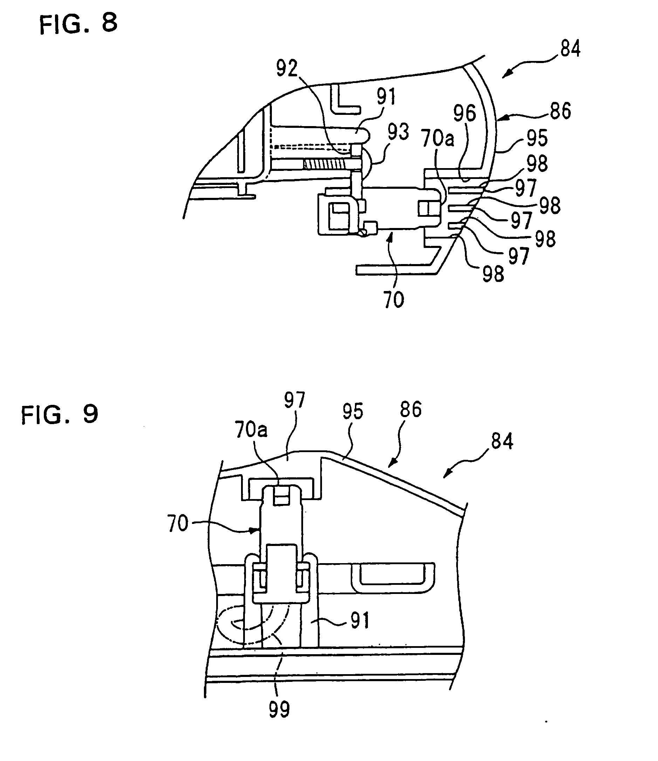

For example, in the present embodiment, an external air temperature sensor 70 is placed inside the case 84. Specifically, as shown in Fig. 8, a mounting platform portion 91 for mounting the external air temperature sensor 70 is formed in the case main body portion 86 of the case 84, and in a position where a front side detection portion 70a is oriented towards the back side of the case 84, a mounting edge portion 92, which protrudes sideways, is mounted on the mounting platform portion 91 and in this state, the external air temperature sensor 70 is fixed to the mounting platform portion 91 by a screw 93 that penetrates the mounting edge portion 92 and screws itself into the mounting platform portion 91.

In addition, as shown in Fig. 7 through Fig. 9, on the stretched out portion 89 of the case main body portion 86, at a position opposite to the front end of the external air temperature sensor 70, a hole 96 is formed, which passes through to the rear side. Here, a plurality of divider plates 97 are formed in the hole 96, which are orthogonal to the hole 96 and mutually parallel, and as a result, the hole 96 is constituted by a plurality of slits 98.

Here, as shown in Fig. 9, the external air temperature sensor 70, in a state where it is placed inside the case 84, is linked to the display section 11, which is similarly mounted inside the case 84, by a harness 99, which extends from the base end side and is only handled inside the case 84.

In addition, since an increase in the space inside the case 84 is achieved through the stretched out portion 89, it is also possible to build in a turning indicator relay and such in the case 84.

According to the present embodiment described above, since the external air temperature sensor 70 is mounted on the case 84, which protects the display section 11 while supporting this display section 11, handling of the harness 99 that links the external air temperature sensor 70 to the display section 11 is easy. It is therefore possible to lower the assembly cost.

Furthermore, since the external air temperature sensor 70 is installed inside the case 84, it is protected by the case 84 such that it is possible to significantly increase the durability of this external air temperature sensor 70.

As described above in detail, according to the invention of Claim 1, since an external air temperature sensor is mounted on a case, which protects a display section while supporting this display section, handling of a harness that links the external air temperature sensor to the display section is easy. It is therefore possible to lower the assembly cost.
Object: To provide an information display apparatus for vehicle wherein handling of the harness that links the external air temperature sensor and the display section is easy and allows the assembly cost to be lowered.
Solution: In an information display apparatus for vehicle having a display section, which receives the detection signal from a plurality of detection means that detect vehicle-related information and displays vehicle-related information, and a case 84, which supports the display section, an external air temperature sensor 70, which detects the external air temperature, among a plurality of detection means, is mounted in the case 84.

## Claims

1. An information display apparatus for a vehicle, the apparatus comprising:
a case (84);
a display section (11) for receiving a detection signal from a plurality of detection means (20, 22, 27, 33, 34, 40, 41, 42, 49, 70) which detect vehicle-related information and for displaying vehicle-related information;
wherein the plurality of detection means (20, 22, 27, 33, 34, 40, 41, 42, 49, 70) comprises an external air temperature sensor (70) that detects the external air temperature;
wherein the display section (11) has a speed meter (24); and
wherein the display section (11) and the external air temperature sensor (70) are mounted on the case (84).

2. The information display apparatus according to claim 1, wherein the external air temperature sensor (70) is mounted at the rear of a switch display section (45) of the display section (11).

3. The information display apparatus according to claim 1 or 2, wherein the case (84) has a stretched out portion (89) that forms an elongated shape protruding in the rear direction, wherein the external air temperature sensor (70) is placed inside the stretched out portion (89).

4. The information display apparatus according to claim 3, wherein, on the stretched out portion (89) of the case (84), at a position opposite to the front end of the external air temperature sensor (70), a hole (96) is formed, which passes through to the rear side of the stretched out portion (89).

5. The information display apparatus according to any one of claims 1 to 4, wherein the display section (11) has a tachometer (15), the external air temperature sensor (70) being placed between the tachometer (15) and the speed meter (24).

## Patentansprüche

1. Informationsanzeigevorrichtung für ein Fahrzeug, wobei die Vorrichtung umfasst:
ein Gehäuse (84);
einen Anzeigeabschnitt (11) zum Empfangen eines Erfassungssignals von einer Mehrzahl von Erfassungsmitteln (20, 22, 27, 33, 34, 40, 41, 42, 49, 70), welche fahrzeugbezogene Information erfassen, und zur Anzeige von fahrzeugbezogener Information;
wobei die Mehrzahl von Erfassungsmitteln (20, 22, 27, 33, 34, 40, 41, 42, 49, 70) einen Außenlufttemperatursensor (70) umfasst, welcher die Au-ßenlufttemperatur erfasst;
wobei der Anzeigeabschnitt (11) einen Geschwindigkeitsmesser (24) hat; und
wobei der Anzeigeabschnitt (11) und der Außenlufttemperatursensor (70) an dem Gehäuse (84) angebracht sind.

2. Informationsanzeigevorrichtung gemäß Anspruch 1, wobei der Außenlufttemperatursensor (70) an der Rückseite eines Schaltanzeigeabschnitts (45) des Anzeigeabschnitts (11) angebracht ist.

3. Informationsanzeigevorrichtung gemäß Anspruch 1 oder 2, wobei das Gehäuse (84) einen verlängerten Abschnitt (89) hat, welcher eine in der Rückwärtsrichtung vorstehende längliche Form ausbildet, wobei der Außenlufttemperatursensor (70) an der Innenseite des verlängerten Abschnitts (89) angeordnet ist.

4. Informationsanzeigevorrichtung gemäß Anspruch 3, wobei an dem verlängerten Abschnitt (89) des Gehäuses (84) an einer Position gegenüber dem vorderen Ende des Außenlufttemperatursensors (70) ein Loch (96) ausgebildet ist, welches zur Rückseite des verlängerten Abschnitts (89) führt.

5. Informationsanzeigevorrichtung gemäß einem der Ansprüche 1 bis 4, wobei der Anzeigeabschnitt (11) einen Drehzahlmesser (15) hat, wobei der Außenlufttemperatursensor (70) zwischen dem Drehzahlmesser (15) und dem Geschwindigkeitsmesser (24) angeordnet ist.

## Revendications

1. Appareil d'affichage d'information pour un véhicule, l'appareil comprenant :
un boîtier (84) ;
une section d'affichage (11) pour recevoir un signal de détection d'une pluralité de moyens de détection (20, 22, 27, 33, 34, 40, 41, 42, 49, 70) qui détectent des informations associées au véhicule et pour afficher des informations associées au véhicule ;
dans lequel la pluralité de moyens de détection (20, 22, 27, 33, 34, 40, 41, 42, 49, 70) comprend un capteur de température d'air externe (70) qui détecte la température d'air externe ;
dans lequel la section d'affichage (11) a un compteur de vitesse (24) ; et
dans lequel la section d'affichage (11) et le capteur de température d'air externe (70) sont montés sur le boîtier (84).

2. Appareil d'affichage d'information selon la revendication 1, dans lequel le capteur de température d'air externe (70) est monté à l'arrière d'une section d'affichage de commutation (45) de la section d'affichage (11).

3. Appareil d'affichage d'information selon la revendication 1 ou 2, dans lequel le boîtier (84) a une portion étirée (89) qui constitue une forme allongée faisant saillie dans la direction vers l'arrière, dans lequel le capteur de température d'air externe (70) est placé à l'intérieur de la portion étirée (89).

4. Appareil d'affichage d'information selon la revendication 3, dans lequel, sur la portion étirée (89) du boîtier (84), à une position opposée à l'extrémité frontale du capteur de température d'air externe (70) un trou (96) est formé, qui traverse vers le côté arrière de la portion étirée (89).

5. Appareil d'affichage d'information selon l'une quelconque des revendications 1 à 4, dans lequel la section d'affichage (11) a un tachymètre (15), le capteur de température d'air externe (70) étant placé entre le tachymètre (15) et le compteur de vitesse (24).
